(19) Europäisches Patentamt
European Patent Office
Office européen des brevets

(11) EP 3 239 232 B1

(12) **EUROPEAN PATENT SPECIFICATION**

(45) Date of publication and mention of the grant of the patent:
**07.08.2019 Bulletin 2019/32**

(21) Application number: **15873294.1**

(22) Date of filing: **25.12.2015**

(51) Int Cl.:
***C08L 29/04*** *(2006.01)*
***C08L 23/26*** *(2006.01)*
***C08L 27/12*** *(2006.01)*
***F16L 11/12*** *(2006.01)*
***F17C 1/16*** *(2006.01)*
***H01M 8/04*** *(2016.01)*
***B32B 27/30*** *(2006.01)*

(86) International application number:
**PCT/JP2015/086275**

(87) International publication number:
**WO 2016/104726 (30.06.2016 Gazette 2016/26)**

(54) **SAPONIFIED ETHYLENE-VINYL ESTER COPOLYMER RESIN COMPOSITION, RESIN TUBE FOR HIGH PRESSURE GAS OR RESIN LINER FOR COMPOSITE CONTAINER, AND HIGH PRESSURE GAS HOSE OR COMPOSITE CONTAINER**

VERSEIFTE ETHYLEN-VINYLESTER-COPOLYMER-HARZZUSAMMENSETZUNG, HARZROHR ODER HARZAUSKLEIDUNG FÜR VERBUNDSTOFFBEHÄLTER FÜR HOCHDRUCKGAS SOWIE HOCHDRUCKGASSCHLAUCH ODER VERBUNDSTOFFBEHÄLTER

COMPOSITION DE RÉSINE À BASE D'UN COPOLYMÈRE ESTER VINYLIQUE-ÉTHYLÈNE SAPONIFIÉ, TUBE EN RÉSINE OU DOUBLURE EN RÉSINE POUR RÉCIPIENT COMPOSITE POUR GAZ HAUTE PRESSION ET TUYAU OU RÉCIPIENT COMPOSITE POUR GAZ HAUTE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2014 JP 2014266899**

(43) Date of publication of application:
**01.11.2017 Bulletin 2017/44**

(73) Proprietor: **Mitsubishi Chemical Corporation**
**Tokyo 1008251 (JP)**

(72) Inventors:
- **SHIBUTANI Mitsuo**
  **Tokyo 100-8251 (JP)**
- **INAKUMA Akinobu**
  **Tokyo 100-8251 (JP)**
- **KANDA Taiji**
  **Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**WO-A1-2014/021422**
**WO-A1-2014/021422**
**JP-A- 2013 071 979**
**JP-A- 2013 227 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 239 232 B1

## Description

[Technical Field]

The present invention relates to a saponified ethylene-vinyl ester copolymer resin composition, a resin tube for high-pressure gas or a resin liner for a composite container, and a high-pressure gas hose or a composite container.

[Background Art]

As a hydrogen gas supply hose for supplying hydrogen gas to a fuel cell in hydrogen gas stations and the like, metal hoses using SUS 316L high-nickel steel and A6061 have been studied, since the binding energy of SUS 304, carbon steel and most other metals is lowered by hydrogen, resulting in embrittlement. However, because metal hoses present problems that they are not flexible, troublesome to handle, and expensive, the development of rubber and resin hoses has recently been advanced. When rubber and resin hoses are used, it has been studied to provide a gas barrier layer within the hose to endow a hydrogen gas barrier performance.

For example, in PTL 1 and PTL 2, a water-resistant olefin resin or a polyethylene terephthalate resin is used for the inner surface layer of a resin tube, a saponified ethylene-vinyl ester copolymer (hereafter, sometimes referred to as "EVOH") resin layer is used as a gas barrier layer, and a nylon resin (PTL 1) or insulating rubber (PTL 2) is used for the outer surface layer in order to prevent the barrier performance of the EVOH resin layer from being affected by moisture permeation.

Furthermore, in order to ensure durability against high-pressure hydrogen in hydrogen gas stations (normal pressure of 82 to 87.5 MPa and design pressure of 90 to 100 MPa or more), hoses with multilayer structure, in which reinforcing layers and the like are laminated on a resin tube, are commonly used. For example, PTL 3 proposes a hydrogen filling hose using, for an inner surface layer, a thermoplastic resin having a gas permeation coefficient for dry hydrogen gas of 1 x $10^{-8}$ cc cm/$cm^2$ sec cmHg or less at 90°C, and using, as a reinforcing layer, a braided structure in which polyparaphenylene benzobisoxazole (PBO) fibers are braided. It is stated that this hydrogen filling hose allows hydrogen embrittlement to be avoided and can withstand use internal pressure of approximately 70 to 80 MPa (paragraph number [0021] in PTL 3).

Meanwhile, although metal materials were conventionally used, resin liners have recently also come into use in composite containers for hydrogen gas fuel, in order to reduce weight. For example, PTL 4 proposes the use of a resin composition comprising 80 to 40 wt% of a saponified ethylene-vinyl acetate copolymer, and 20 to 60 wt% of acid-modified ethylene-$\alpha$-olefin copolymer rubber and/or an acid-modified thermoplastic elastomer, as a liner for a hydrogen-gas composite container allowing for molding a single-layer structure, which can achieve both hydrogen gas barrier properties and impact resistance at low temperatures.

However, the principal object of this technology is to improve impact resistance, and hydrogen gas pressure of not more than approximately 10 MPa is assumed (paragraph [0029]). Furthermore, the hydrogen gas barrier performance of the resin composition normally tends to decrease with increases in the amount of acid-modified ethylene-$\alpha$-olefin copolymer rubber and/or acid-modified thermoplastic elastomer blended.

Normally, because filling and depressurization with high-pressure hydrogen (normal pressure of 82 to 87.5 MPa and design pressure of 90 to 100 MPa or more) are repeated in hydrogen gas stations, cracks may occur in layers of resin such as nylon and polyoxymethylene in hoses or composite containers. The cause of these cracks has not yet been determined, but it is thought that they are due to insufficient resistance to hydrogen brittleness of the resin layer (which is to say, the resin tube or resin liner) in the hoses or composite containers.

Furthermore, in terms of the general hydrogen brittleness behavior of resins, blistering as well as crazing/cracking and the like may be seen to occur within the resin. Blistering is a phenomenon in which hydrogen that has dissolved in the resin upon pressurization does not fully return to the gas phase upon depressurization, but rather expands within the resin, forming bubbles, and leading to internal damage to the resin. Crazing/cracking are phenomena in which micro-cracks are formed when stress is repeatedly relaxed at the resin surface layer to which a constant strain load is applied (crazing), or in which cracks are formed due to the development of craze that has been further repeatedly formed (cracking).

In order to control these phenomena, there is a demand for the development of a gas barrier resin composition that can be used as a protective layer with which hydrogen diffusion is suppressed, which has good low-temperature characteristics, and which is resistant to hydrogen brittleness.

Technology is known in which, in response to this demand, a resin composition is used comprising an EVOH resin having a specific structure and a fluororesin having a specific functional group that reacts with a hydroxyl group (PTL 5).

Other than that, PTL 6 mentions high pressure gas hoses or storage vessels having at least one layer comprising a resin composition containing a side chain 1,2-diol-containing vinyl alcohol resin and a fluororesin having a polar

functional group that forms hydrogen bonds with or reacts with hydroxyl groups.

However, in this conventional technology, while it is possible to suppress the diffusion of hydrogen into the resin composition layer, when used as a protective layer, it is insufficient in resistance to hydrogen brittleness (blister resistance under higher pressures and the like), and is insufficient in low-temperature characteristics. Recently, with increased safety demands, and in consideration of durability, even though the normal pressure is, for example, 82 MPa, in terms of pressure resistance performance, there has been a demand for design pressure in excess of 90 MPa.

[Citation List]

[Patent Literature]

PTL 1: Japanese Unexamined Patent Application Publication No. 2007-015279 A
PTL 2: Japanese Unexamined Patent Application Publication No. 2009-019717 A
PTL 3: Japanese Unexamined Patent Application Publication No. 2010-031993 A
PTL 4: Japanese Unexamined Patent Application Publication No. 2005-068300 A
PTL 5: Japanese Unexamined Patent Application Publication No. 2014-058659 A
PTL 6: International Unexamined Patent Application Publication No. WO 2014/021422 A1

[Summary of Invention]

[Technical Problem]

Thus, an object of the present invention is to provide: a resin composition having gas barrier properties, which has excellent low-temperature characteristics and resistance to hydrogen brittleness without greatly detracting from gas barrier properties, and which can contribute to improve durability when used as a resin tube for high-pressure gas and as a resin liner for a composite container; a resin tube for high-pressure gas or a resin liner for a composite container having at least one layer that contains the resin composition; and a high-pressure gas hose or a composite container having at least one layer that contains the resin composition.

[Solution to Problem]

Model tests for resistance to hydrogen brittleness (blister resistance and the like) under high pressures of more than 90 MPa correspond to accelerated durability tests under hydrogen exposure. A person skilled in the art will ordinarily conceive of preventing the dissolution/permeation of hydrogen gas into the resin layer by further increasing hydrogen barrier properties, in order to endow a gas barrier resin with resistance to hydrogen brittleness (durability) and low-temperature characteristics, allowing for use even if repeatedly exposed to hydrogen environment in a range from high pressure of over 90 MPa to ordinary pressure. Furthermore, because EVOH resins are resins with markedly higher levels of gas barrier properties, as compared to other thermoplastic resins, in order to provide gas barrier properties under even harsher conditions, a person skilled in the art would ordinarily avoid polymer alloying with other resins.

Meanwhile, when only an acid anhydride-modified polyolefin is used as a polymer alloying component, the melt viscosity of the polymer alloy composition is markedly increased, and therefore problems may arise such as the formation of gels and particles due to the increased viscosity during melt molding.

However, as a result of the earnest studies, the present inventors has selected a fluororesin (A) having a functional group capable of interacting, or reacting, with a hydroxyl group and a thermoplastic resin (B) having a carboxyl group or an acid anhydride group (however, the fluororesin (A) and EVOH having a carboxyl group or an acid anhydride group are excluded), and has discovered that the problems described above are solved by an EVOH resin composition containing these resins and an EVOH (C).

The technology according to the present invention has overturned the conventional idea of preventing the dissolution/permeation of hydrogen gas in the resin layer under high pressure, and by making a resin layer by combining a component with a high hydrogen diffusion coefficient (fluororesin) and a component with excellent low-temperature characteristics (thermoplastic resin), has created a situation in which, even if hydrogen gas dissolves/permeates in the resin layer under high pressure, the hydrogen can readily return to the gas phase.

Furthermore, by using a fluororesin (A) having a functional group capable of interacting, or reacting, with a hydroxyl group and a thermoplastic resin (B) having a carboxyl group or an acid anhydride group (however, the fluororesin (A) and EVOH having a carboxyl group or an acid anhydride group are excluded), it is possible to obtain a resin tube for high-pressure gas and a resin liner for a composite container, which have excellent impact strength, even when

exposed to cold temperatures of -40°C.

That is to say, the present invention is an EVOH resin composition comprising: a fluororesin (A) having a functional group capable of interacting, or reacting, with a hydroxyl group; a thermoplastic resin (B) having a carboxyl group or an acid anhydride group (however, the fluororesin (A) and EVOH having a carboxyl group or an acid anhydride group are excluded); and an EVOH (C).

Furthermore, the present invention is a resin tube for high-pressure gas or a resin liner for a composite container having at least one layer that contains the EVOH resin composition of the present invention, and a high-pressure gas hose or a composite container having at least one layer that contains the EVOH resin composition of the present invention.

[Advantageous Effects of Invention]

Because the low-temperature characteristics and the resistance to hydrogen brittleness are excellent, without greatly detracting from the gas barrier properties, the EVOH resin composition of the present invention can contribute to improve durability when used as a resin tube for high-pressure gas or as a resin liner for a composite container. For example, by laminating a layer comprising the EVOH resin composition of the present invention on an inner layer of a nylon resin or the like that is used as the principal material for a hose or composite container, it is possible to suppress diffusion/dissolution of hydrogen into the nylon principal material, and it is possible to endow the high-pressure gas hose or composite container with durability, even at low temperatures associated with precooling (-40°C), which conventionally presented problems.

[Brief Description of Drawings]

FIG. 1 is a schematic diagram illustrating a configuration of a device used in a high-pressure hydrogen exposure test in Examples.

FIG. 2 is a diagram illustrating a configuration of a specimen used in Examples.

[Description of Embodiments]

Hereafter, configurations of the present invention are described in detail but these are merely examples of preferred modes of embodiment, and the present invention is not specified by the content thereof.

An EVOH resin composition of the present invention contains: a fluororesin (A) having a functional group capable of interacting, or reacting, with a hydroxyl group; a thermoplastic resin (B) having a carboxyl group or an acid anhydride group (however, the fluororesin (A) and EVOH having a carboxyl group or an acid anhydride group are excluded); and an EVOH (C). First, the EVOH (C) will be described.

<Saponified ethylene-vinyl ester copolymer (C)>

The saponified ethylene-vinyl ester copolymer (EVOH) (C) of the present invention is a known thermoplastic resin that has gas barrier properties and is water insoluble, and is a resin that is ordinarily produced by saponifying a copolymer of ethylene and a vinyl ester monomer (ethylene-vinyl ester copolymer). The polymerization can be performed using any known polymerization method such as solution polymerization, suspension polymerization or emulsion polymerization, but solution polymerization with methanol as the solvent is generally used. Saponification of the resulting ethylene-vinyl ester copolymer can also be performed by known methods.

The EVOH (C) manufactured in this manner primarily contains ethylene-derived structural units and vinyl alcohol structural units, and may sometimes contain some vinyl ester structural units remaining without having been saponified.

The EVOH (C) has ethylene-derived structural units, and therefore the difference between the melting point and the decomposition temperature is greater than that of a polyvinyl alcohol resin that does not have ethylene-derived structural units, which makes melt molding possible. Furthermore, having ethylene-derived structural units provides water resistance as compared to the polyvinyl alcohol resin.

Examples of the vinyl ester monomer include, for example, vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and vinyl trifluoroacetate and the like. Among these, with a view to economy, the use of vinyl acetate is preferred.

The content of ethylene structural units in the EVOH (C), for a value measured based on ISO 14663, is preferably 15 to 60 mol%, particularly preferably 18 to 38 mol%, and more preferably 18 to 34 mol%. If the content of ethylene structural units is too low, the water resistance tends to decrease, and if the content of ethylene structural units is too high, the hydrogen resistance and hydrogen gas barrier properties under ultrahigh pressures tend to decrease.

The degree of saponification of the EVOH (C), for a value measured based on JIS K6726 (where the EVOH (C) is in a solution uniformly dissolved in a water/methanol solvent), is preferably 90 mol% or more, particularly preferably 95 to 100 mol%, and more preferably 99.5 to 100 mol%. If the degree of saponification is too low, the gas barrier properties and the like tend to be inferior.

Furthermore, the melt flow rate (MFR) of the EVOH (C) (210°C, 2160 g load) is preferably 0.5 to 100 g/10 min, particularly preferably 0.5 to 50 g/10 min, and more preferably 1 to 30 g/10 min. If the melt flow rate is too low, an extrusion processing tends to be difficult due to high torque state in the extruder when molding, while if the melt flow rate is too high, the gas barrier properties and the like tend to be inferior.

Furthermore, in addition to ethylene structural units and vinyl alcohol structural units (optionally including unsaponified vinyl ester structural units), the EVOH (C) used in the present invention may further include structural units derived from the monomers indicated below, in a range that is not detrimental to the effect of the present invention (normally 3 mol% or less, and preferably 2 mol% or less).

Such monomers include, for example: olefins such as propylene, 1-butene, and isobutene; unsaturated acids such as acrylic acid, methacrylic acid, crotonic acid, (anhydrous) phthalic acid, (anhydrous) maleic acid, and (anhydrous) itaconic acid or salts thereof, or mono- or di-alkylesters in which the alkyl has 1 to 18 carbon atoms; acrylamides such as acrylamide, N-alkylacrylamides in which the alkyl has 1 to 18 carbon atoms, N,N-dimethylacrylamide, 2-acrylamido propane sulfonic acid or salts thereof, and acrylamide propyl dimethyl amine or salts thereof or quaternary salts thereof; methacrylamides such as methacrylamide, N-alkyl methacrylamides in which the alkyl has 1 to 18 carbon atoms, N,N-dimethylmethacrylamide, 2-methacrylamide propane sulfonic acid or salts thereof, and methacrylamide propyl dimethyl amine or salts thereof or quaternary salts thereof; N-vinyl amides such as N-vinylpyrrolidone, N-vinylformamide, and N-vinylacetamide; vinyl cyanides such as acrylonitrile and methacrylonitrile; vinyl ethers such as alkylvinyl ethers, hydroxyalkyl vinyl ethers and alkoxyalkyl vinyl ethers, in which the alkyl has 1 to 18 carbon atoms; vinyl halides such as vinyl chloride, vinylidene chloride, vinyl fluoride, vinylidene fluoride, and vinyl bromide; vinylsilanes; allyl acetates; allyl chlorides; allyl alcohols; dimethylallyl alcohols; trimethyl-(3-acrylamido-3-dimethylpropyl)-ammonium chloride; acrylamido-2-methylpropanesulfonic acid; vinyl ethylene carbonate; and the like.

Further included are cationic group-containing monomers such as N-acrylamidomethyl trimethylammonium chloride, N-acrylamideethyl trimethylammonium chloride, N-acrylamidopropyl trimethylammonium chloride, 2-acryloxyethyl trimethylammonium chloride, 2-methacryloxyethyl trimethylammonium chloride, 2-hydroxy-3-methacryloyloxypropyl trimethylammonium chloride, allyl trimethylammonium chloride, methallyl trimethylammonium chloride, 3-butene trimethylammonium chloride, dimethyl diallyl ammonium chloride, and diethyl diallyl ammonium chloride; acetoacetyl group-containing monomers and the like.

Furthermore, vinyl silanes include, for example, vinyl trimethoxysilane, vinyl methyl dimethoxysilane, vinyl dimethyl methoxy silane, vinyl triethoxy silane, vinyl methyl diethoxy silane, vinyl dimethyl ethoxy silane, vinyl isobutyl dimethoxysilane, vinyl ethyl dimethoxysilane, vinyl methoxy dibutoxy silane, vinyl dimethoxy butoxy silane, vinyl tributoxy silane, vinyl methoxy dihexyloxy silane, vinyl dimethoxy hexyloxy silane, vinyl trihexyloxy silane, vinyl methoxy dioctyloxy silane, vinyl dimethoxy octyloxy silane, vinyl trioctyloxy silane, vinyl methoxy dilauryloxy silane, vinyl dimethoxy lauryloxy silane, vinyl methoxy dioleyloxy silane, and vinyl dimethoxy oleyloxy silane. It is noted that, from the point of view of moldability, a carboxylic acid-modified EVOH is undesirable for the EVOH (C), and therefore it is preferable that monomers forming carboxylic acid-modified EVOH be excluded.

These may be used alone or multiple types can be used at the same time.

Structural units derived from these monomers can be normally introduced into the EVOH (C) by copolymerizing ethylene, the vinyl ester monomer and the aforementioned monomers with known methods.

Furthermore, "post-modified" EVOH resins, which have been urethanized, acetalated, cyanoethylated or oxyalkylenated by known methods can be used as the EVOH (C).

Furthermore, the EVOH (C) can have a structural unit (a) having a primary hydroxyl group on a side chain. In particular, when an EVOH resin having a structural unit (a) having a primary hydroxyl group on a side chain is used, it is possible to decrease the crystal size without impairing the hydrogen bonds in the amorphous portion, such that the melting point can be preferably lowered without impairing the hydrogen barrier characteristics or the like, even with low ethylene modification. Such structural units (a) having a primary hydroxyl group on a side chain include structural units derived from monomers having primary hydroxyl groups on a side chain, as set forth below.

Examples include: monohydroxyalkyl group-containing monomers such as allyl alcohol, 3-buten-1-ol, 4-penten-1-ol, 5-hexen-1-ol, and 6-hepten-1-ol; disubstituted diol monomers such as 2-methylene-1,3-propanediol; 1,2-diol group-containing monomers such as 3,4-diol-1-butene, 4,5-diol-1-pentene, 4,5-diol-3-methyl-1-pentene, and 5,6-diol-1-hexene; glycerol monoallyl ether or hydroxymethyl vinylidene diacetate; and other ethylenically unsaturated monomers. Examples of other ethylenically unsaturated monomers include hydroxymethyl vinylidene diacetate, and specifically include, 1,3-diacetoxy-2-methylene-propane, 1,3-dipropionyloxy-2-methylenepropane, 1,3 dibutylonyloxy-2-methylenepropane and the like. Among these, 1,3-diacetoxy-2-methylenepropane is preferably used in view of ease of manufacture. One or more of these monomers may be included.

From among these monomers, particularly preferred is 1,2-diol group-containing monomers allowing a 1,2-diol structure to be produced.

In order to introduce the structural unit (a), it is preferable that copolymerization be performed with the hydroxyl group of the aforementioned monomer protected by ordinary methods such as esterification. In this case, examples of the monomer include: esters of disubstituted diol monomers such as 2-methylene-1,3-propanediol diacetate, 2-methylene-1,3-propanediol dipropionate and 2-methylene-1,3-propanediol dibutyrate; acylated 1,2-diol-containing monomers such as 4,5-diacyloxy-1-pentene and 5,6-diacyloxy-1-hexene; vinyl carbonate monomers such as vinyl ethylene carbonate; 2,2-dialkyl-4-vinyl-1,3-dioxolane, and the like.

The content of the structural unit (a) in the EVOH having the structural unit (a) that has a primary hydroxyl group on a side chain is preferably 0.5 to 15 mol%, particularly preferably 0.5 to 12 mol%, more preferably 1 to 8 mol%, and especially preferably 2 to 4 mol%. If the content of the structural unit (a) is too low, the effect of depressing the melting point is not readily apparent, and the melt molding characteristics tend to be impaired, while if the content of the structural unit (a) is too high, the water resistance tends to decrease, which may be due to excessive drop of the crystallinity of the resin.

In adjusting the content of the structural unit (a), the adjustment can also be performed by blending at least two types of EVOH having different introduction amount of the structural unit (a). Here, it is preferable that the difference in the ethylene content in the EVOHs be less than 2 mol%. Furthermore, the adjustment can also be performed by blending an EVOH having a structural unit (a) and an EVOH not having a structural unit (a).

Conventionally, there have been problems in the EVOH in that, because the melting point increases with decreases in the ethylene content, the difference between the thermal decomposition temperature and the melting point of the resin tends to decrease, which impairs the molding workability. "POLYVINYL ALCOHOL-DEVELOPMENTS," p. 205, Figure 8.4, by C.A. FINCH shows that the melting point will be 200°C or more if the ethylene content is less than 20 mol%, and it will be appreciated that the difference with respect to the thermal decomposition temperature of the resin is slight in that range. In the present invention, by containing the structural unit (a) in the EVOH, the crystal size of the resin is reduced, and the melting point is lowered, which tends to increase the difference with respect to the thermal decomposition temperature of the resin, and thus improves molding workability.

The structural unit in the following General Formula (1), which is to say a structural unit having 1,2-glycol bonds on a side chain is, for example, preferred for the structural unit (a) having a primary hydroxyl group on a side chain.

[Formula 1]

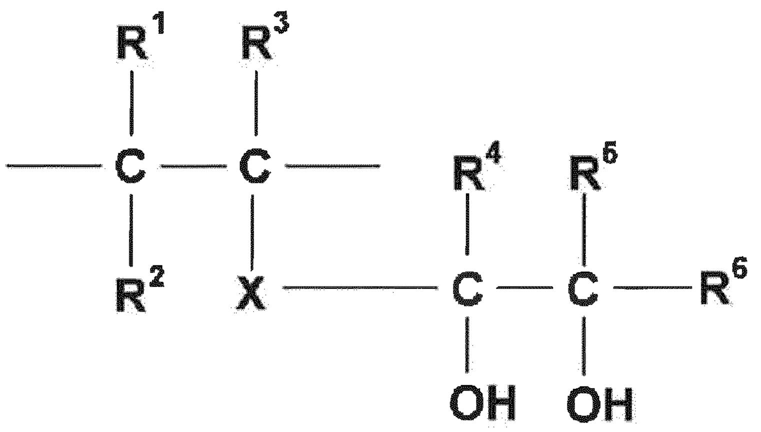

(1)

(In the formula, $R^1$ to $R^3$ each independently represent a hydrogen atom or an organic group, X represents a single bond or a bonding chain, and $R^4$ to $R^6$ each independently represent a hydrogen atom or an organic group.)

$R^1$ to $R^6$ are preferably all hydrogen atoms, but may be organic groups, as long as these are in amounts that will not greatly impair the resin properties. While there are no particular limitations on the organic groups, for example, alkyl groups having 1 to 4 carbon atoms, such as a methyl group, ethyl group, n-propyl group, isopropyl group, n-butyl group, isobutyl group, or tert-butyl group are preferred, and the organic groups may have substituents such as a halogen group, hydroxyl group, ester group, carboxylic acid group, and sulfonic acid group, as necessary. $R^1$ to $R^3$ are preferably hydrogen atoms or alkyl groups having 1 to 4 carbon atoms, and hydrogen atoms are particularly preferred. $R^4$ to $R^6$ are preferably hydrogen atoms or alkyl groups having 1 to 4 carbon atoms, and hydrogen atoms are particularly preferred.

In the above-described General Formula (1), X is a single bond or a bonding chain, and a single bond is preferred

from the point of view of improving crystallinity and decreasing the free volume (free volume pore size) in the amorphous portion. There are no particular limitations on the bonding chain but this includes, for example, in addition to a hydrocarbon such as an alkylene, alkenylene, alkynylene, phenylene, or naphthylene (these hydrocarbons may be substituted with halogens such as fluorine, chlorine, and bromine), a structural unit containing an ether binding site such as -O-, $-(CH_2O)_m-$, $-(OCH_2)_m-$, and-$(CH_2O)_mCH_2-$; a structural unit containing a carbonyl group such as -CO-,-COCO-, $-CO(CH_2)mCO-$, and $-CO(C_6H_4)CO-$; a structural unit containing a sulfur atom such as -S-, -CS-, -SO-, and $-SO_2-$; a structural unit containing a nitrogen atom such as -NR-, -CONR-, -NRCO-, -CSNR-, -NRCS-, and -NRNR-; a structural unit containing a heteroatom such as a structure containing a phosphorus atom such as $-HPO_4-$; a structural unit containing a silicon atom such as $-Si(OR)_2-$,$-OSi(OR)_2-$, and $-OSi(OR)_2-O-$; a structural unit containing a titanium atom such as $-Ti(OR)_2-$, $-OTi (OR)_2-$, and $-OTi(OR)_2O-$; a structural unit containing a metal atom such as an aluminum atom, such as -Al(OR)-, -OAl(OR)-, and -OAl(OR)O-; and the like. In these structural units, each R is independently any substituent, and hydrogen atoms and alkyl groups are preferred. Furthermore, m is a natural number, which is usually 1 to 30, preferably 1 to 15, and particularly preferably 1 to 10. Among these bonding chains, from the point of view of stability during manufacture or during use, a hydrocarbon chain having 1 to 10 carbon atoms is preferred, a hydrocarbon chain having 1 to 6 carbon atoms is more preferred, and a hydrocarbon chain having 1 carbon atom is particularly preferred.

A particularly preferred structural unit for the 1,2-diol structural unit represented by the above-described General Formula (1) is the structural unit represented by the following Structural Formula (1a), in which $R^1$ to $R^3$ and $R^4$ to $R^6$ are all hydrogen atoms and X is a single bond.

[Formula 1a]

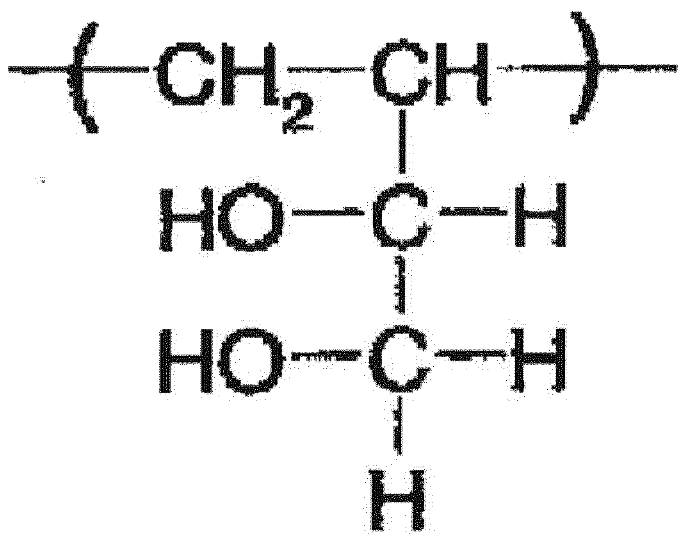

(1a)

Furthermore, the EVOH (C) used in the present invention may be a mixture with another different EVOH resin, and examples of such other EVOH resins include: resins containing different amounts of the 1,2-diol structural unit represented by the General Formula (1); resins having different degrees of saponification; resins having different degrees of polymerization; resins having different copolymerization components and the like.

<Fluororesin (A)>

The fluororesin (A) used in the present invention is a fluororesin into which a functional group has been introduced, which is capable of interacting, or reacting, with a hydroxyl group. The functional group capable of interacting, or reacting, with a hydroxyl group (hereafter, also referred to as a "polar functional group") is preferably a carbonyl-containing group or a hydroxyl group, and more preferably is a carbonyl-containing group.

The carbonyl-containing group is preferably, for example, at least one selected from the group consisting of a carbonate group, haloformyl group, aldehyde group (including formyl group), ketone group, carboxyl group, alkoxycarbonyl group, carboxylic acid anhydride group and isocyanato group, and is particularly preferably a carbonate group, fluoroformyl group, chloroformyl group, carboxyl group, methoxycarbonyl group, ethoxycarbonyl group, or carboxylic acid anhydride group, and more preferably a carboxylic acid anhydride group.

The polar functional groups in such a fluororesin (A) can interact, or react, with the hydroxyl groups in the EVOH (C), and therefore chemical bonds are formed at the interface between the two, such that a block polymer is formed

between a portion of the EVOH (C) and the fluororesin (A), and the block copolymer that is formed acts as a compatibilizer, whereby the interface between a portion of the EVOH (C) and the fluororesin (A) is strengthened.

Furthermore, as with fluororesins not having polar functional groups, the fluororesin (A) is characterized by low hydrogen solubility in an environment with a hydrogen gas pressure of 70 MPa. Consequently, it can be expected that the low hydrogen solubility of the EVOH (C) will not be compromised in the mixed system of the EVOH (C) and the fluororesin (A).

The fluororesin (A) is preferably a fluorine-based copolymer comprising at least tetrafluoroethylene as a constituent monomer. In addition to other fluorine-containing vinyl monomers such as hexafluoropropylene, vinylidene fluoride, perfluoro(alkyl vinyl ether), a monomer represented by $CH_2=CX(CF_2)_nY$ (X and Y are each independently a fluorine atom or a hydrogen atom, and n is 2 to 10) (hereinafter, the monomer is referred to as "FAE"), vinyl monomers based on olefins such as ethylene and propylene, vinyl ethers, vinyl esters, and other halogen-containing vinyl monomers may be copolymerized with the fluorine-based copolymer, for example.

In the FAE, in the formula, n is preferably 2 to 8, particularly preferably 2 to 6, and 2, 4 and 6 are more preferable. If n is too low, the heat resistance and stress cracking resistance of molded products of the resin composition tend to decrease. If n is too high, the polymerizability tends to be insufficient. Among these values, if n is in the range of 2 to 8, the polymerizability of the FAE will be good. Furthermore, it will be easily possible to produce a molded product with excellent heat resistance and stress cracking resistance. One or more types of FAE may be used. Preferred specific examples of such FAEs include $CH_2=CH(CF_2)_2F$, $CH_2=CH(CF_2)_4F$, $CH_2=CH(CF_2)_6F$, $CH_2=CF(CF_2)_3H$ and the like. Still more preferably, $CH_2=CH\text{-}Rf$ (Rf is a perfluoroalkyl group having 2 to 6 carbon atoms) is used as the FAE.

Specific examples of the fluororesin include tetrafluoroethylene/perfluoro(alkyl vinyl ether) copolymers, tetrafluoroethylene/hexafluoropropylene copolymers, tetrafluoroethylene/perfluoro(alkyl vinyl ether)/hexafluoropropylene copolymers, ethylene/tetrafluoroethylene copolymers, ethylene/chlorotrifluoroethylene copolymers, ethylene/tetrafluoroethylene/hexafluoropropylene copolymers, ethylene/tetrafluoroethylene/$CH_2=CH\text{-}Rf$ (Rf is a perfluoroalkyl group having 2 to 6 carbon atoms) copolymers, ethylene/tetrafluoroethylene/hexafluoropropylene/$CH_2=CH\text{-}Rf$ (Rf is a perfluoroalkyl group having 2 to 6 carbon atoms) copolymers and the like.

From among these, a fluorine-based copolymer containing ethylene as constituent monomer is preferred, and one selected from the group consisting of, for example, an ethylene/tetrafluoroethylene copolymer, an ethylene/tetrafluoroethylene/hexafluoropropylene copolymer, an ethylene/tetrafluoroethylene/$CH_2=CH\text{-}Rf$ (Rf is a perfluoroalkyl group having 2 to 6 carbon atoms) copolymer, and ethylene/tetrafluoroethylene/hexafluoropropylene/$CH_2=CH\text{-}Rf$ (Rf is a perfluoroalkyl group having 2 to 6 carbon atoms) copolymer is preferred. An ethylene/tetrafluoroethylene/hexafluoropropylene copolymer, and an ethylene/tetrafluoroethylene copolymer are particularly preferred. Hereinafter, ethylene is also indicated by "E", tetrafluoroethylene is also indicated by "TFE", hexafluoropropylene is also indicated by "HFP", and ethylene/tetrafluoroethylene may also be indicated by "E/TFE copolymer", and ethylene/tetrafluoroethylene/hexafluoropropylene copolymer may also be indicated by "E/TFE/HFP copolymer".

Furthermore, in order to improve the stress cracking resistance or to maintain good productivity of fluororesin, it is also preferable to copolymerize a $CH_2=CH\text{-}Rf$ (Rf indicates a perfluoroalkyl group having 2 to 6 carbon atoms) comonomer with the E/TFE copolymer or the E/TFE/HFP copolymer. Note that it is particularly preferred that the Rf in the $CH_2=CH\text{-}Rf$ have 4 carbon atoms.

Methods for introducing functional groups into the fluororesin as described above include: a method in which, when manufacturing the fluororesin by polymerizing a fluorine-containing vinyl monomer such as TFE or HFP, the fluorine-containing vinyl monomer and the vinyl monomer having the polar functional group are copolymerized; a method in which a polar functional group is introduced at the end of the polymer by polymerizing the fluorine-containing vinyl monomer in the presence of a polymerization initiator or a chain transfer agent having a polar functional group; a method in which, after mixing the vinyl monomer having a polar functional group and the fluororesin, the resultant is irradiated with radiation; and a method in which, after mixing the vinyl monomer having the polar functional group, the fluororesin and a radical initiator, the comonomer having the polar functional group is graft polymerized to the fluororesin by way of melt extruding. From among these, preferred is a method in which the fluorine-containing vinyl monomer and the comonomer having a polar functional group (e.g., an itaconic anhydride or citraconic anhydride) are copolymerized, as described in Japanese Unexamined Patent Application Publication No. 2004-238405A.

For the vinyl monomer having a polar functional group, for example: monomers providing a carboxylic acid anhydride group such as maleic anhydride, itaconic anhydride, citraconic anhydride, and 5-norbornene-2,3-dicarboxylic acid anhydride (also referred to as "bicyclo[2.2.1]hept-2-ene-5,6-dicarboxylic acid anhydride"); monomers providing a carboxyl group such as acrylic acid, methacrylic acid, maleic acid, fumaric acid, itaconic acid, citraconic acid, crotonic acid, bicyclo[2.2.1]hept-2-ene-5,6-dicarboxylic acid, $CF_2=CFOCF_2CF_2CF_2COOH$, $CF_2=CFOCF_2CF(CF_3)OCF_2CF_2COOH$, and $CH_2=CHCF_2CF_2CF_2COOH$; alkyl esters thereof such as methyl esters and ethyl esters; alkali metal salts and ammonium salts thereof, and the like can be used.

For the polymerization initiator having a polar functional group, for example, a peroxide having a peroxycarbonate group, or a peroxide having a peroxyester can be used, among which, use of a peroxide having a peroxycarbonate

group is more preferable. For the peroxide having a peroxycarbonate group, for example, diisopropyl peroxycarbonate, di-n-propyl peroxydicarbonate, t-butyl oxyisopropylcarbonate, bis(4-t-butylcyclohexyl) peroxydicarbonate, di-2-ethylhexyl peroxydicarbonate, and the like are preferably used.

Examples of a chain transfer agent having a polar functional group include: alcohols such as methanol, ethanol, propanol, butanol or the like; carboxylic acids such as acetic anhydride; thioglycolic acid; thioglycol, and the like.

The percentage content of polar functional groups in the fluororesin (A) ((number of moles of polar functional group/number of moles of fluororesin constituent monomers) x 100) is preferably 0.01 to 10 mol%, particularly preferably 0.05 to 5 mol%, and more preferably 0.1 to 3 mol%. If the percentage content of polar functional groups is too low, the affinity for the EVOH (C) will be excessively reduced, making it difficult to achieve a micro-dispersion of the fluororesin (A) and, as a result, it tends to become difficult to produce a homogeneous resin composition. That is to say, it becomes difficult to form a sea-island structure in which the fluororesin (A) constitutes minute islands, and as a result, not only is the improvement in resistance to fatigue from bending insufficient, but voids and aggregates form, which tends to cause decreases in the gas barrier properties and the melt molding characteristics, which are the original advantages of the EVOH (C).

The melting point of the fluororesin (A) used in the present invention is preferably 120 to 240°C, particularly preferably 150 to 210°C, and more preferably 170 to 190°C. If this becomes excessively higher than the melting point of the EVOH (C), which is the main component of the resin composition, it will be necessary to raise the melting temperature to the high temperatures of 250 to 290°C when manufacturing the composition and, as a result, this tends to bring about degradation of the EVOH (C) and inferior color. Normally, with a fluororesin (A) having the percentage content of polar functional groups in the aforementioned range, the melting point will be in the aforementioned range. Note that the melting point indicates the melting peak temperature (°C) as measured using a differential scanning calorimeter (DSC) at a heating rate of 10°C/min.

The volumetric flow rate (hereinafter referred to as "Q value") of the fluororesin (A) is preferably 0.1 to 1000 $mm^3/s$, particularly preferably 1 to 500 $mm^3/s$, and more preferably 2 to 200 $mm^3/s$. The Q value is an index indicating the molten fluidity of the resin in question when melt molding a fluororesin, and is an indicator of molecular weight. That is to say, a greater Q value indicates a lower molecular weight and a smaller Q value indicates a higher molecular weight. Here, the Q value is the rate at which the resin is extruded using a Flow Tester manufactured by Shimadzu Corporation at a temperature higher than the melting point of the fluororesin by 50°C, when extruded through an orifice with a diameter of 2.1 mm and a length of 8 mm under a load of 7 kg. If the Q value is too low, the extrusion molding of the fluororesin tends to become difficult, and if the Q value is too large, the mechanical strength of the resin tends to decrease.

There are no particular limitations on the method for manufacturing a fluororesin (A) such as described above, and a method is normally adopted in which the fluorine-containing vinyl monomer and the other comonomer are loaded into a reactor, and copolymerization is performed using a commonly used radical polymerization initiator and chain transfer agent. Examples of polymerization methods include the known methods of: bulk polymerization; solution polymerization using, as a polymerization medium, an organic solvent such as a fluorinated hydrocarbon, a chlorinated hydrocarbon, a fluorinated chlorinated hydrocarbon, an alcohol, or hydrocarbon; suspension polymerization using, as the polymerization medium, an aqueous medium and a suitable organic solvent as necessary; and emulsion polymerization using an aqueous medium and an emulsifier as the polymerization medium. Solution polymerization is particularly preferred. The polymerization can be carried out using a single-tank or multi-tank stirred polymerization apparatus or tubular polymerization apparatus or the like, and may be performed by batchwise or continuous operation.

For the radical polymerization initiator, an initiator is preferred with which the half-life will be 10 hours at a temperature of 0 to 100°C, and more preferably at 20 to 90°C. Examples include: azo compounds such as azo-bisisobutyronitrile; peroxydicarbonates such as diisopropyl peroxydicarbonate; peroxy esters such as tert-butyl peroxypivalate, tert-butylperoxy isobutyrate, and tert-butylperoxy acetate; non-fluorinated diacyl peroxides such as isobutyrylperoxide, octanoyl peroxide, benzoyl peroxide, and lauroyl peroxide; fluorine-containing diacyl peroxides such as $(Z(CF_2)_PCOO)_2$ (here, Z is a hydrogen atom, a fluorine atom or a chlorine atom, and p is an integer from 1 to 10); inorganic peroxides such as potassium persulfate, sodium persulfate, ammonium persulfate, and the like.

Polymerization media may include: organic solvents such as fluorinated hydrocarbons, chlorinated hydrocarbons, fluorinated chlorinated hydrocarbons, alcohols, and hydrocarbons; aqueous media, and the like, as described above.

Chain transfer agents may include: alcohols such as methanol and ethanol; chlorofluorohydrocarbons such as 1,3-dichloro-1,1,2,2,3-pentafluoropropane and 1,1-dichloro-1-fluoroethane; hydrocarbons such as pentane, hexane, and cyclohexane; and fluorine-containing hydrocarbons such as 1-hydrotridecafluorohexane, and the like.

There are no particular limitations on the polymerization conditions but, the polymerization temperature is, for example, preferably 0 to 100°C, and particularly preferably 20 to 90°C. The polymerization pressure is preferably 0.1 to 10 MPa, particularly preferably 0.5 to 3 MPa. The polymerization time may vary with the polymerization temperature, the polymerization pressure and the like, but 1 to 30 hours is preferred and 2 to 10 hours is particularly preferred.

<Thermoplastic resin (B)>

The thermoplastic resin (B) used in the present invention is a thermoplastic resin (B) having a carboxyl group or an acid anhydride group (however, the fluororesin (A) and saponified ethylene-vinyl ester copolymers having a carboxyl group or an acid anhydride group are excluded).

Examples of such a thermoplastic resin (B) include a polyolefin resin that has been modified with an acid such as an unsaturated carboxylic acid, an anhydride thereof or the like. Examples of the polyolefin resin include homopolymers, copolymers and the like of olefins, such as linear low density polyethylene (LLDPE), low density polyethylene (LDPE), very low density polyethylene (VLDPE), medium density polyethylene (MDPE), high density polyethylene (HDPE), ethylene-vinyl acetate copolymer (EVA), ionomers, ethylene-propylene (block or random) copolymers, ethylene-acrylic acid ester copolymers, polypropylene, propylene-α-olefin (a-olefins having 4 to 20 carbon atoms) copolymers, polybutene, polypentene and the like.

Examples of such a thermoplastic resin (B) can include modified polyolefin resins containing a carboxyl group, obtained by chemically bonding an unsaturated carboxylic acid or anhydride thereof to a polyolefin resin by way of an addition reaction, graft reaction or the like. Acid graft modified polyolefin resins are particularly preferred and, more specifically, suitable is alone, or a mixture of two or more selected from maleic anhydride graft modified polyethylene, maleic anhydride graft modified polypropylene, maleic anhydride graft modified ethylene-propylene (block or random) copolymer, maleic anhydride graft modified ethylene-ethyl acrylate copolymer, maleic anhydride graft modified ethylene-vinyl acetate copolymer and the like.

[Acid-modified ethylene-α-olefin copolymer rubber and acid-modified TPE]

An acid-modified ethylene-α-olefin copolymer rubber or an acid-modified TPE (thermoplastic elastomer) can be used for the thermoplastic resin (B), but the acid-modified ethylene-α-olefin copolymer rubber is preferred in terms of improving the impact resistance of the resin composition.

There are no particular limitations on the acid-modified ethylene-α-olefin copolymer rubber used in the present invention but these are ethylene-propylene copolymer rubber (EPR), ethylene-butene copolymer rubber (EBR), ethylene-octene copolymer rubber (EOR) or the like modified with an acid such as an unsaturated carboxylic acid, an anhydride thereof or the like, and specifically include modified ethylene-α-olefin copolymer rubber containing a carboxyl group obtained by chemically bonding an unsaturated carboxylic acid or an anhydride thereof to an ethylene-α-olefin copolymer rubber by way of an addition reaction, graft reaction or the like. In particular, the acid graft-modified ethylene-α-olefin copolymer rubber is preferred, and more specifically including maleic anhydride graft modified ethylene-α-olefin copolymer rubber. An embrittlement temperature of -40°C or less is particularly suitable in terms of improving impact resistance. -60°C or less is particularly preferred, and -70° or less is more preferred. The lower limit for the embrittlement temperature is normally - 150°C or more.

There are no particular limitations on the acid-modified TPE used in the present invention, but examples thereof include olefin-based TPE (TPO), styrene-based TPE (TPS), ester-based TPE (TPEE), and amide-based TPE (TPAE), and TPO or TPS is preferred. A TPO hard segment is made from an olefin resin, and can be exemplified by polypropylene (PP) or polyethylene (PE). A TPO soft segment can be exemplified by ethylene-α-olefin copolymer rubber (EPR), ethylene-α-olefin-non-conjugated diene copolymer rubber (EPDM) and the like. TPS includes styrene-butadiene-styrene block copolymer (SBS), styrene-isoprene-styrene block copolymer (SIS), hydrogenated products thereof such as styrene-ethylene-butylene-styrene block copolymer (SEBS) and styrene-ethylene-propylene-styrene block copolymer (SEPS), and the like.

The melt flow rate (MFR) of the thermoplastic resin (B) (230°C, 2160 g load) is preferably 0.1 to 100 g/10 min, particularly preferably 0.3 to 50 g/10 min, and more preferably 1 to 30 g/10 min. If the melt flow rate is too low, an extrusion processing tends to be difficult due to high torque state in the extruder when molding, while if the melt flow rate is too high, the difference in melt viscosity with the EVOH (C) increases and the domain size tends to increase when polymer alloying.

The melting point of the thermoplastic resin (B) is preferably 50 to 240°C, and particularly preferably 60 to 230°C. If the melting point is too high, it is necessary to set the set temperature of the molding equipment high, and the molding workability tends to be inferior due to thermal degradation of the EVOH (C), while if the melting point is too low, the mechanical properties tend to be inferior when the molded products are used at high temperatures.

It is noted that the melting point indicates the melting peak temperature (°C) as measured using a differential scanning calorimeter (DSC) at a heating rate of 10°C/min.

<Saponified ethylene-vinyl ester copolymer resin composition>

The saponified ethylene-vinyl ester copolymer (EVOH) resin composition of the present invention comprises

a fluororesin (A) having a functional group capable of interacting, or reacting, with a hydroxyl group; a thermoplastic resin (B) having a carboxyl group or an acid anhydride group (however, the fluororesin (A) and EVOH having a carboxyl group or an acid anhydride group are excluded); and an EVOH (C), and is prepared by blending these at a predetermined ratio, and melt kneading.

A known mixing apparatus such as an extruder, Banbury mixer, kneader ruder, mixing roller or blast mill can be used for the melt kneading. For example, in the case of extruders, single screw extruders, twin screw extruders and the like are included. A method can be adopted in which, after melt kneading, the resin composition is extruded as a strand and cut, to produce pellets.

This melt kneading may be performed by loading the fluororesin (A), the thermoplastic resin (B) and the EVOH (C) together, or may be performed by side-feeding the fluororesin (A) and the thermoplastic resin (B) in a molten state or in a solid-state, while melt kneading the EVOH (C) with a twin screw extruder.

The melt kneading temperature is suitably selected according to the types of fluororesin (A), thermoplastic resin (B) and EVOH (C), and is preferably 210 to 250°C, particularly preferably 210 to 240°C, more preferably 215 to 235°C, and especially preferably 215 to 225°C.

In the EVOH resin composition of the present invention, the total content of the fluororesin (A) and the thermoplastic resin (B) is preferably 1 to 40 wt%, particularly preferably from 5 to 35 wt%, and more preferably 10 to 35 wt% of the EVOH resin composition. If the total content is too low, the low temperature properties and resistance to hydrogen brittleness tend to be inferior, while the total content is too high, the gas barrier properties tend to be inferior.

The content ratio [(A)/(B)] of the fluororesin (A) and the thermoplastic resin (B) is preferably 1/5 to 5/1 (weight ratio), particularly preferably 1/3 to 3/1 (weight ratio), and more preferably 1.1/1 to 2.5/1 (weight ratio). If the content ratio is too low, the molding characteristics and the like tend to be inferior, due to gelling or the like in the melt kneading process, which may be due to increased reactions with the hydroxyl groups in the EVOH (C). If the content ratio is too high, the impact resistance and flexibility tend to be lower, but it is preferable that the content ratio be greater than 1/1 (weight ratio).

The EVOH resin composition having a composition such as described above can form a polymer alloy having a sea-island structure in which the EVOH (C), which is the principal component, serves as a matrix and the fluororesin (A) and the thermoplastic resin (B) constitute the islands. The polar functional groups in the fluororesin (A) can interact, or react, with the hydroxyl groups in the EVOH (C), which allows for strong interfaces at the interfaces in the sea-island structure. Furthermore, in the sea-island structure of the EVOH resin composition, the average diameter of the island portions is preferably 0.1 to 3 μm, particularly preferably 0.1 to 1.5 μm, more preferably 0.1 to 1.3 μm, and especially preferably 0.1 to 1 μm. If the average diameter is too large, the hydrogen resistance tends to decrease, while if this is too small, the melt viscosity tends to increase.

Because the EVOH resin composition of the present invention is melt molded, the melt viscosity is preferably such that the MFR at 220°C, with a load of 2160 g, is 0.3 or more, more preferably 0.5 or more, and particularly preferably 0.7 or more, so as not to reduce workability. The upper limit is usually no greater than 10. In terms of methods for causing the MFR to be within a specific range, while this depends on the melt viscosity of each of the resin components, the quantity of functional groups in the fluororesin (A), and the quantity of carboxyl groups or acid anhydride groups in the thermoplastic resin (B), and thus it is not possible to give a general rule, the MFR can be caused to be within a specific range by adjusting the blending ratio of the fluororesin (A) and the thermoplastic resin (B), adjusting the blending ratio of the EVOH (C) to the total amount of the fluororesin (A) and the thermoplastic resin (B), adjusting the processing temperature when manufacturing the resin composition, and adjusting the screw pattern of the processing equipment.

In terms of improving the thermal stability of the resin composition, the long-run molding characteristics, the interlayer adhesion with adhesive resins when a laminate is produced, the hot-stretch molding characteristics and the like, it is preferable that the EVOH resin composition of the present invention include acids such as acetic acid, boric acid, or phosphoric acid, or salts thereof with metals such as alkali metals, alkaline earth metals, and transition metals. The use of alkali metal salts and alkaline earth metal salts is particularly preferred in terms of the excellent effects thereof.

Such metal salts are for example metal salts of: an alkali metal such as sodium, potassium, calcium, or magnesium; and an organic acid such as acetic acid, propionic acid, butyric acid, lauric acid, stearic acid, oleic acid, or behenic acid; or an inorganic acid such as sulfuric acid, sulfurous acid, carbonic acid, or phosphoric acid. Acetate salts, phosphate salts, and hydrogen phosphate salts are preferred. Furthermore, the content of the metal salt, expressed in terms of the metal with respect to the resin composition is preferably 5 to 1000 ppm, particularly preferably 10 to 500 ppm, and more preferably 20 to 300 ppm. If this content is too low, the effect of containing it tends not to be fully produced, and conversely if the content is too high, the appearance of the molded product obtained tends to be inferior.

It is noted that, if two or more alkali metal and/or alkaline earth metal salts are contained in the resin composition, it is preferable that the total amount thereof be within the aforementioned content range. Furthermore, when boric acid is contained, the content expressed in terms of boron is preferably 10 to 10000 ppm, particularly preferably 20 to 2000 ppm, and more preferably 50 to 1000 ppm.

Furthermore, in a range that does not impede the object of the present invention, the EVOH resin composition

of the present invention may contain lubricants such as saturated aliphatic amides (for example, stearamide), unsaturated fatty acid amides (for example, oleamide), bis-fatty acid amides (for example, ethylene bis-stearamide), fatty acid metal salts (for example, calcium stearate, magnesium stearate, or zinc stearate), and low molecular weight polyolefins (for example, low molecular weight polyethylene, or low molecular weight polypropylene with a molecular weight of approximately 500 to 10,000), inorganic salts (for example, hydrotalcite), plasticizers (for example, aliphatic polyhydric alcohols such as ethylene glycol, glycerol, and hexane diol), oxygen absorbing agents, thermostabilizers, photostabilizers, antioxidants, ultraviolet absorbing agents, colorants, antistatic agents, surfactants, antimicrobial agents, anti-blocking agents (for example, talc microparticles), slip agents (for example, amorphous silica), fillers (for example, inorganic fillers), other resins (for example, polyolefins, or polyesters, other than the thermoplastic resin (B)) and the like.

Oxygen absorbing agents include inorganic compound-based oxygen absorbing agents, organic compound-based oxygen absorbing agents, and polymer compound-based oxygen absorbing agents. Examples of inorganic compound-based oxygen absorbing agents include reduced iron powder, products in which a water absorbing material, an electrolyte or the like are further added thereto, aluminum powder, potassium sulfite, photocatalytic titanium oxide and the like. Examples of organic compound-based oxygen absorbing agents include ascorbic acid, as well as fatty acid esters and metal salts thereof, hydroquinone, gallic acid, polyhydric phenols such as hydroxyl group-containing phenol aldehyde resins, bis-salicylaldehyde-imine cobalt, tetraethylene-pentamine cobalt, cobalt-Schiff base complexes, porphyrins, macrocyclic polyamine complexes, coordinate complexes of a nitrogen-containing compound and a transition metal such as a polyethylene-imine cobalt complex, terpene compounds, reaction products of amino acids and a reductive substance containing hydroxyl groups, triphenylmethyl compounds, and the like. Examples of polymer-based oxygen absorbing agents include coordinate complexes of a nitrogen-containing resin and transition metal (for example, a combination of MXD nylon and cobalt), blends of a tertiary hydrogen-containing resin and a transition metal (for example, a combination of polypropylene and cobalt), blends of a resin containing carbon-carbon unsaturated bonds and a transition metal (for example, a combination of polybutadiene and cobalt), photooxidative degradable resins (for example, polyketones or the like), anthraquinone polymers (for example, polyvinyl anthraquinone) and the like. Further blends of photoinitiators (for example, benzophenone and the like) and peroxide scavengers (for example, commercially available antioxidants) and deodorants (for example, activated carbon) with these blends may also be mentioned.

The EVOH resin composition of the present invention can be molded into any molded product. For example, this can be made into a single-layer film, sheet, or molded product, and can also be made into a multilayer structure laminated with another resin layer and any substrate.

Molding methods applied to commonly known EVOHs can be applied to the EVOH resin composition of the present invention. Examples include solution molding methods such as solution casting and solution coating, and melt molding methods such as extrusion molding, coextrusion molding, injection molding, blow molding, and rotational molding.

Films and multilayer structures made from the EVOH resin composition of the present invention can be further processed by known methods. For example, dry lamination and stretching methods such as a uniaxial stretching, biaxial stretching, vacuum forming, and pressure forming can be employed.

<High-pressure gas hose or composite container>

The high-pressure gas hose or composite container of the present invention (hereafter also referred to simply as "hose or composite container") includes at least one layer comprising the EVOH resin composition described above (hereafter also referred to as a "gas barrier layer"). In the present invention, "hose" means a tube having a "resin tube" made from resin and a "reinforcing layer" for transporting high-pressure gas. In the present invention, "composite container" means a container having a "resin liner" made from resin and a "reinforcing layer" for containing high-pressure gas.

Preferably the resin tube or resin liner comprising a multilayer structure includes a gas barrier layer. This gas barrier layer may be a single layer. In cases where the resin tube or resin liner is a multilayer structure, the gas barrier layer may be included as an inner layer (which is to say, a layer in contact with the high-pressure gas) or an intermediate layer, and is more preferably included as an intermediate layer. Furthermore, it is preferable that a water resistant and moisture impermeable thermoplastic resin layer be included at an inner layer and/or and outer layer (which is to say, a layer in contact with the outer air). Note that, an intermediate layer refers to a layer between an outer layer and an inner layer.

The high-pressure gas hose or composite container of the present invention is required to have a high level of pressure resistance for normal pressure of 80 MPa or more, and therefore a reinforcing layer is further provided on the outside of the resin tube or the resin liner. Such a reinforcing layer is a layer in contact with the outer air (outermost layer). Moreover, between these layers, the surface of the resin layer may be subjected to corona treatment, or an adhesive layer comprising an adhesive resin such as epoxy resin or the like may be provided.

Accordingly, the laminated structure constituting the high-pressure gas hose or composite container includes, in order from the inside, a gas barrier layer/reinforcing layer, a gas barrier layer/moisture impermeable thermoplastic resin layer/reinforcing layer, a moisture impermeable thermoplastic resin layer/gas barrier layer/reinforcing layer, a

moisture impermeable thermoplastic resin layer/gas barrier layer/moisture impermeable thermoplastic resin layer/reinforcing layer, or the like. Preferably this is a moisture impermeable thermoplastic resin layer/gas barrier layer/moisture impermeable thermoplastic resin layer/reinforcing layer. Between the layers of the multilayer structure constituting the hose or composite container, the surface of the resin layer may be subjected to corona treatment, and an adhesive layer may be provided, such as by further providing an epoxy resin layer. It is noted that the total number of layers in the multilayer structure is normally 2 layers to 15 layers, and preferably 3 layers to 5 layers, including the reinforcing layer.

With regard to the ratio of the thicknesses of the gas barrier layer and the moisture impermeable thermoplastic resin layer, with the thicknesses of all of the layers of the same type within the laminate combined, normally the moisture impermeable thermoplastic resin layer is thicker, and the ratio of the thickness of the moisture impermeable thermoplastic resin layer with respect to the gas barrier layer (moisture impermeable thermoplastic resin layer/gas barrier layer) is normally 1 to 100, preferably 3 to 20, and particularly preferably 6 to 15. The thickness of the moisture impermeable thermoplastic resin layer is normally 50 to 5000 $\mu$m.

If the gas barrier layer is too thin, it tends to be difficult to produce high-level gas barrier properties in the resulting hose or composite container, or for collapse to occur, leading to buckling failure. If this is too thick, the flexibility and the economy tend to be inferior.

Furthermore, if the moisture impermeable thermoplastic resin layer is too thin, the strength of the resulting hose or composite container tends to decrease, while if this is too thick, the bending resistance and flexibility tend to decrease and the internal volume tends to be reduced.

Furthermore, if an adhesive layer is used, the ratio of the thickness of the gas barrier layer with respect to the adhesive layer (gas barrier layer/adhesive layer) is normally 1 to 100, preferably 1 to 50 and particularly preferably 1 to 10. The thickness of the adhesive layer is preferably 10 to 500 $\mu$m. If the adhesive layer is too thin, the interlayer adhesion tends to be insufficient, while if this is too thick, the resistance to hydrogen brittleness (suppression of cracks, blisters and the like) tends to decrease, and the hydrogen barrier properties and the like tend to be inferior.

Hydrophobic thermoplastic resins can, for example, preferably be used as the thermoplastic resin used for the moisture impermeable thermoplastic resin layer. Specifically, examples include, polyethylene resins such as linear low density polyethylene (LLDPE), low density polyethylene (LDPE), medium density polyethylene (MDPE) and high density polyethylene (HDPE); ethylene copolymers such as ethylene-vinyl acetate copolymer, ionomers thereof, ethylene-propylene copolymers, ethylene-$\alpha$-olefin ($\alpha$-olefin having 4 to 20 carbon atoms) copolymers, and ethylene-acrylic acid ester copolymers; polypropylene resins such as polypropylene, and propylene-$\alpha$-olefin ($\alpha$-olefin having 4 to 20 carbon atoms) copolymers; broadly defined polyolefin resins such as homo- or copolymers of an olefin such as polybutene or polypentene, cyclic polyolefin, or homo- or copolymers of these olefins graft-modified with an unsaturated carboxylic acid or an ester thereof (carboxylic acid-modified polyolefin-based resins, ester-modified polyolefin resins); polystyrene resins; polyamide resins such as polyamides, such as nylon 11, nylon 12, nylon 6, or nylon 66, or copolymerized polyamides such as nylon 6/12 or nylon 6/66; vinyl ester resins such as polyvinyl chloride, polyvinylidene chloride, acrylic resins, or polyvinyl acetate; polyurethane resins; fluorine polymers such as tetrafluoroethylene, tetrafluoroethylene/perfluoro(alkyl vinyl ether) copolymer, ethylene/tetrafluoroethylene copolymer, and tetrafluoroethylene/hexafluoropropylene copolymer; chlorinated polyethylene; chlorinated polypropylene; fluororesins having a polar group; and thermoplastic resins such as thermoplastic polyurethane.

Among these, in terms of water resistance, strength, toughness and low-temperature durability, polyolefin resins are preferred, in particular at least one resin selected from polyolefin resins having a polar group, polyamide resins, and fluororesins having a polar group is preferred, and at least one resin selected from carboxylic acid-modified polyolefin resins, polyamide resins, and fluororesins having a polar group is particularly preferred; polyamide resins, and particularly nylon 6/66 copolymer resins, nylon 6, and the like are preferred for reasons of hydrogen resistance, low creep characteristics or the like. It is noted that, the outside of the moisture impermeable thermoplastic resin layer may be coated with epoxy resin.

Known adhesive resins can be used for the adhesive layer, and carboxylic acid-modified polyolefin resins, in which a polyolefin resin has been modified with an unsaturated carboxylic acid such as maleic acid (or an unsaturated carboxylic acid anhydride), and fluororesins having a polar group are ordinarily preferably used. The polyolefin resins listed as the thermoplastic resins used in the moisture impermeable thermoplastic resin layer described above can be used as the polyolefin resin.

In terms of balance between economy and performance, a carboxylic acid-modified polyolefin resin is preferred, and a carboxylic acid-modified polypropylene resin or carboxylic acid-modified polyethylene resin, or a mixture of these, is particularly preferred.

Note that in order to improve the molding workability and various physical properties, various common known additives, modifiers, fillers, other resins and the like may be admixed to the moisture impermeable thermoplastic resin layer and the adhesive layer, within a range that does not detract from the effect of the present invention.

The EVOH resin composition used in the present invention is adhesive to PVA resins and other EVOH resins, and therefore, in a special mode of embodiment, PVA resins and other EVOH resins can also be used for the moisture

impermeable thermoplastic resin layer described above. Examples of layer configurations include polyamide resin layer/other EVOH resin layer/gas barrier layer, polyamide resin layer/other EVOH resin layer/gas barrier layer/other EVOH resin layer, and the like. The polyamide resin is preferably nylon 6 or a nylon 6 based copolymerized polyamide, and particularly preferably is nylon 6/66.

Reinforcing layers include reinforcing fiber layers using fibers, reinforcing rubber layers using rubber and the like. For example, high-strength fibers such as polyparaphenylene benzobisoxazole (PBO) fibers, aramid fibers and carbon fibers, non-woven fabric, cloth and the like can be used for the reinforcing fiber layer. Preferably, this is a reinforcing fiber layer, and particularly preferably this is a reinforcing fiber layer using a high-strength fiber and more preferably, this is a sheet layer with a braided high-strength fiber, or a reinforcing fiber layer in which the sheet is wrapped in a spiral.

It is noted that, for example, a configuration based on the structure described in Japanese Unexamined Patent Application Publication No. 2010-031993 A may be used as the structure for the hose reinforcing layer. The use of polyparaphenylene benzobisoxazole (PBO) fibers for the hose reinforcing layer is preferred. Carbon fibers are suitable for use in the reinforcing layer of the composite container. From the point of view of strength, it is preferable that the carbon fibers be of the PAN type, and from the point of view of controlling thermal conductivity, it is preferable that these be of the pitch type with a high thermal conductivity.

When the present invention is a resin tube or a resin liner for a composite container comprising a multilayer structure including at least one gas barrier layer, and a hose or composite container, the mean coefficients of linear expansion of the materials constituting each of resin layers that constitute the multilayer structure are preferably close to each other. Furthermore, the ratio of the mean coefficient of linear expansion of the layers constituting the multilayer structure with respect to the gas barrier layer (material constituting the multilayer structure/EVOH composition) is normally 2 or less, preferably 0.8 to 1.8, and particularly preferably 1 to 1.8. Preferably, the ratio of a layer adjacent to the gas barrier layer, with respect to the gas barrier layer (material constituting adjacent layers/EVOH composition) is within the aforementioned range, and particularly preferably, the ratio of the outermost layer with respect to the gas barrier layer (material constituting the outermost layer/EVOH composition) is within the aforementioned range.

By causing the ratio of the mean coefficients of linear expansion to approach 1, each of the layers will exhibit similar behavior for environmental changes during high-pressure of hydrogen exposure and during depressurization, such that the gas barrier layer can follow the behavior of the other layers, allowing for alleviation of the loads, such as bending loads, to which the gas barrier layer is subjected.

The mean coefficients of linear expansion measured under the same conditions can be applied for this ratio of mean coefficients of linear expansion. Furthermore, it is preferable to use the mean coefficient of linear expansion at -60 to 40°C, which is the temperature range for actual use in the high-pressure gas equipment.

In particular, in the case of a hose or composite container having a sheet layer in which the aforementioned high-strength fibers are braided, or a layer in which such a sheet is wound in a spiral (reinforced fiber layer) as a reinforcing layer, it is preferable that the combination of layer materials in the multilayer structure be selected with consideration given to the coefficients of linear expansion of the reinforcing fiber layers. Note that the mean coefficients of linear expansion can be measured with a thermomechanical analyzer (TMA).

The inner diameter, outer diameter, thickness and length of the resin tube and hose may be selected according to the application, and for example, the inner diameter of the hose is usually 1 to 180 mm, preferably 3 to 100 mm, particularly preferably 4.5 to 50 mm, and especially preferably 5 to 12 mm. The outer diameter of the hose is usually 5 to 200 mm, preferably 7 to 100 mm, particularly preferably 9 to 50 mm, and especially preferably 10 to 15 mm. The thickness of the hose is usually 1 to 50 mm, preferably 1 to 20 mm, and particularly preferably 1 to 10 mm. The length of the hose is usually 0.5 to 300 m, preferably 1 to 200 m, and particularly preferably 3 to 100 m.

The thicknesses and the sizes of the resin liner for the composite container and the composite container may be selected according to the application and, for example, the thickness of the composite container is normally 1 to 100 mm, preferably 3 to 50 mm, and particularly preferably 3 to 10 mm. The volumetric size of the composite container may be selected according to the application, such as for vehicle mounting or for a pressure accumulator, and while there are no particular limitations, the volume is usually 5 to 500 L, preferably 10 to 400 L, and particularly preferably 50 to 300 L.

The thickness of the gas barrier layer is normally selected from a range of 2 to 60%, and particularly preferably 3 to 20% of the thickness of the resin tube or resin liner for the composite container, or of the hose or the composite container.

The gas barrier layer in the resin tube for high-pressure gas or the resin liner for a composite container, the hose or the composite container of the present invention has excellent gas barrier characteristics with respect to gases such as hydrogen, helium, oxygen, nitrogen and air, and preferably with respect to gas components having molecular weights of less than 10. Gas components having molecular weights of less than 10 include hydrogen, helium and the like, and hydrogen is preferred. Furthermore, because the hydrogen barrier properties of the gas barrier layer are high, while this depends on the layer structure, as a result of laminating the gas barrier layer, the laminate will not readily subject to hydrogen embrittlement, and it will be possible to maintain the initial mechanical strength over long periods of time.

Furthermore, the gas barrier layer makes it possible to suppress blistering, even if exposure to high-pressure hydrogen gas and depressurization are repeated, whereby it is possible to prevent reduction in adhesive strength and occurrence of collapse at the interface between the gas barrier layer and the adjacent layers (for example, the reinforcing layer and the moisture impermeable thermoplastic resin layer), in the resin tube or resin liner for a composite container, the hose or the composite container, having the multilayer structure.

Accordingly, the resin tube for high-pressure gas or the resin liner for a composite container, and the hose or the composite container of the present invention can suitably be used, in hydrogen stations, as a high-pressure hydrogen supply hose or composite container of type IV or the like, or a composite container or hose for hydrogen gas fuel for a fuel cell, in which there is a need for excellent durability against hydrogen embrittlement with repeated exposure to high-pressure hydrogen and depressurization.

The normal pressure of a high-pressure gas hose is normally 35 to 90 MPa, preferably 50 to 90 MPa, particularly preferably 80 to 90 MPa, and more preferably 82 to 87.5 MPa.

Furthermore, the normal pressure of a composite container for high-pressure gas is normally 35 to 100 MPa.

Furthermore, examples of design pressure for high-pressure gas hoses, when illustrated starting from lowest pressure, are greater than 86 MPa, greater than 95 MPa, greater than 97 MPa, greater than 98.4 MPa and the like.

Note that, in the foregoing description, the description centered on hydrogen gas, but target gases with which the excellent gas barrier properties of the gas barrier layer according to the present invention can be exhibited are not limited to high-pressure hydrogen gas. The gas barrier layer may be preferably used for a resin tube or resin liner for a composite container, and a hose or a composite container, for a high-pressure gas such as helium, nitrogen, oxygen, and air in addition to hydrogen gas. In particular, satisfying both gas barrier properties and hydrogen resistance properties for gases with molecular weights of less than 10, such as hydrogen and helium, was difficult with conventional known materials but the gas barrier layer according to the present invention is capable of satisfying both demands.

[Examples]

Hereafter the present invention is described in further detail by way of Examples, but so long as the gist thereof is not departed from, the present invention is not limited to the following Examples. Note that, in the examples, "%" and "parts" refer to weight basis.

[Example and Comparative Examples 1 to 4]

The following materials were used for the EVOH resin composition in Example and in Comparative Examples 1 to 4.

*Materials*

<Fluororesin (A)>

A polymerization tank having a capacity of 430 liters, equipped with a stirrer, was degassed and, as solvents, 200.7 kg of 1-hydrotridecafluorohexane and 55.8 kg of 1,3-dichloro-1,1,2,2,3-pentafluoropropane (Asahi Glass Co., Ltd., AK225cb, hereinafter referred to as "AK225cb") were charged and, as a polymerization monomer, 1.3 kg of $CH_2$=CH($CF_2$)$_4$F was further charged. Next, as polymerization monomers, 122.2 kg of hexafluoropropylene (HFP), 36.4 kg of tetrafluoroethylene (TFE), and 1.2 kg of ethylene (E) were injected, the temperature in the polymerization tank was raised to 66°C, as a polymerization initiator, 85.8 g of tert-butyl peroxypivalate was charged, and polymerization was initiated. A monomer mixture gas with a composition of TFE/E = 54/46 (molar ratio) was continuously charged so that the pressure during the polymerization was kept constant, $CH_2$=CH($CF_2$)$_4$F was continuously charged so as to constitute 1.0 mol% with respect to the TFE/E monomer mixture gas, and itaconic anhydride, which is a compound including a polar functional group, was continuously charged so as to constitute 0.35 mol%, with respect to the TFE/E monomer mixture gas. After 3.6 hours from the start of polymerization, at the point in time at which 29 kg of the monomer mixture gas had been charged, the temperature within the polymerization tank was lowered to room temperature and the polymerization tank was purged to ordinary pressure.

The solvent was distilled off from the resulting slurry, to obtain a fluororesin having an acid anhydride group as a polar functional group and, as a result of vacuum drying this at 130°C for 4 hours, 30 kg of an acid anhydride group-containing fluororesin (A1) was obtained. The acid anhydride group-containing fluororesin (A1) had a melting point of 176°C, a Q value of 12 $mm^3$/s, and a copolymer composition of TFE/E/HFP/$CH_2$=CH($CF_2$)$_4$F/itaconic anhydride = 47.83/42.85/7.97/1.00/0.35 (mol%).

<Thermoplastic resin (B)>

- Acid-modified ethylene-α-olefin copolymer rubber (Mitsui Chemicals Inc., TAFMER MA8510, melting point: 69°C, MFR: 5.0 g/10 min [230°C, load 2160 g, ASTM D1238], embrittlement temperature: below -70°C)

<EVOH (C)>

- EVOH (C1) (ethylene content: 32 mol%; saponification degree 99.7 mol%, melting point 183°C, MFR: 3.8 g/10 min [210°C, load 2160 g, ASTM D1238])
- EVOH (C2) (ethylene content: 29 mol%; saponification degree 99.7 mol%, melting point 188°C, MFR: 3.8 g/10 min [210°C, load 2160 g, ASTM D1238])

[Preparation of EVOH Resin Composition]

The materials described above were used to prepare the EVOH resin compositions of Example and Comparative Examples (excluding Comparative Example 1). The resin compositions used were pelletized under the following conditions, using a twin screw extruder (TECHNOVEL Corp.). Note that, in the preparation of the resin compositions, the respective resins were dry blended, whereafter melt kneading and extruding were performed with the twin screw extruder.

Screw diameter: 15 mm

$$L/D = 60$$

Directions of rotation: same direction
Screw pattern: three kneading blocks
Screen mesh: 90/90 mesh
Screw rotation speed: 200 rpm
Temperature pattern: C1/C2/C3/C4/C5/C6/C7/C8/D = 190/200/210/210/215/215/220/220/220°C
Resin temperature: 220°C

[Measurement and Evaluation Method]

The following measurements and evaluations were performed for the resin compositions of Example and Comparative Examples.

(1) Resistance to hydrogen brittleness (blister resistance)

Dumbbell-shaped specimens such as described below were prepared using the EVOH resin composition of the present invention, and whether or not blistering occurred was evaluated after a high-pressure hydrogen gas exposure/depressurization cycle test.

Using high-pressure hydrogen gas equipment such as shown in FIG. 1, a dumbbell-shaped specimen such as shown in FIG. 2 (compliant with ISO 527-3, $b_1$ = 6, $b_2$ = 25, $L_0$ = 25, $l_1$ = 33, L = 80, $l_3$= 115, h = 1, all units are mm) was set as a specimen (11), the hydrogen gas pressure was increased to 98.4 MPa over 0.5 hours, five cycles of a pressure pattern were performed in which one cycle consisted of exposure under this high-pressure hydrogen environment for 20 hours, depressurization to 0.1 MPa over 30 seconds, then standing for 0.5 hours.

After the high-pressure hydrogen gas exposure/depressurization cycle test, the specimen (11) was removed, the state of the specimen (11) was visually observed, and the blister formation situation (which was normally seen in the dumbbell portion) was observed. Cases in which the number of blisters formed in the dumbbell portion was 0 were evaluated as "A (excellent)"; cases in which the number of blisters formed in the dumbbell portion was from 1 to less than 20 were evaluated as "B (good)"; cases in which the number of blisters formed in the dumbbell portion was from 20 to less than 50 were evaluated as "C (fair)"; and cases in which there were 50 or more were evaluated as "D (poor)".

(2) Impact resistance

Izod impact strength tests were performed using notched specimens at 23°C and at -40°C, in accordance with ISO 180. It can be said that practical utility is satisfied in cases in which 5 $kJ/m^2$ is exceeded for all temperatures.

(3) Melt viscosity

The MFRs of the target resin compositions were measured in accordance with ISO 1133 at 220°C and a load of 2160 g, using a "Melt Indexer F-F01" manufactured by Toyo Seiki Co., Ltd. Cases in which the measured value was 0.7 g/10 min or more were considered "A (good)", cases in which the measured value was 0.3 g/10 min or more but less than 0.7 g/10 min were considered "B (fair)", and cases in which the measured value was less than 0.3 g/10 min were considered "C (poor)". In cases where this is less than 0.3 g/10 min, working at 220°C is difficult, such that it is necessary that work be done at higher temperatures, and therefore it is highly probable that decomposition of the EVOH, gelling and particle formation will occur.

(4) Average diameter of the island portions

Pellets of the resulting resin compositions were cut under liquid nitrogen, and the cut faces were observed with an SEM so as to measure the average diameters of the island portions.

[Table 1]

<table>
<tr><td colspan="2" rowspan="2">Evaluation method</td><td>Example</td><td>Comparative Example 1</td><td>Comparative Example 2</td><td>Comparative Example 3</td><td>Comparative Example 4</td></tr>
<tr><td>EVOH (CD/acid-modified fluorore sin/ acid-modified polyolefin=70/20/10 (weight ratio)</td><td>EVOH (C1)</td><td>EVOH (C1)/ acid-modified polyolefin = 70/30 (weight ratio)</td><td>EVOH (C2)/ acid-modified fluororesin = 80/20 (weight ratio)</td><td>EVOH (C2)/ acid-modified polyolefin = 80/20 (weight ratio)</td></tr>
<tr><td colspan="2">Resistance to hydrogen brittleness (blister resistance)</td><td>A</td><td>D</td><td>-</td><td>D</td><td>D</td></tr>
<tr><td rowspan="2">Impact resistance</td><td>23°C</td><td>82</td><td>1</td><td>-</td><td>7</td><td>74</td></tr>
<tr><td>-40°C</td><td>6</td><td>1</td><td>-</td><td>4</td><td>13</td></tr>
<tr><td colspan="2" rowspan="2">Melt viscosity MFR (g/10 min)</td><td>A</td><td>A</td><td>C</td><td>A</td><td>A</td></tr>
<tr><td>0.8</td><td>5.6</td><td>< 0.1</td><td>2.8</td><td>0.8</td></tr>
<tr><td colspan="2">Average diameter of the island portions</td><td>0.30 μm</td><td>-</td><td>-</td><td>-</td><td>0.44 μm</td></tr>
<tr><td colspan="7">-: Indicates that measurement was not possible or measurement was not performed because it was not possible to prepare a sample due to difficulties in molding.</td></tr>
</table>

When using only EVOH as in Comparative Example 1, after the high-pressure hydrogen gas exposure/depressurization cycle test, 50 or more blisters were formed. Furthermore, while there were no problems in terms of fluidity at 5.6 g/10 min, at 220°C, in the melt viscosity test, the values in the impact resistance tests, at both 23°C and -40°C, were very low at 1 $kJ/m^2$, and thus it was understood that practical utility was lacking.

Meanwhile, in Comparative Example 2, in which a resin composition was used containing EVOH and an acid-modified polyolefin at 70/30 (weight ratio), the result in the melt viscosity test was less than 0.3 g/10 min, possibly because there was a large acid-modified polyolefin content and large quantities of hydroxyl groups and acid-modified groups reacted, and thus practical utility was lacking, and melt molding was difficult, such that it was not possible to perform measurements in the high-pressure hydrogen gas exposure/depressurization cycle test and the impact resistance tests.

In Comparative Example 3, in which a resin composition was used containing EVOH and acid-modified fluororesin at 80/20 (weight ratio), the result in the melt viscosity test was 2.8 g/10 min, and there were no problems in terms of fluidity at 220°C, but 50 or more blisters were formed after the high-pressure hydrogen gas exposure/depressurization

cycle test. While the result in the impact resistance test at 23°C was 7 kJ/m$^2$, which had practical utility, the result at -40°C was 4 kJ/m$^2$, which did not have practical utility.

In Comparative Example 4, in which a resin composition was used containing EVOH and acid-modified polyolefin at 80/20 (weight ratio), the result in the melt viscosity test was 0.8 g/10 min, and while the results in the impact resistance tests were excellent, with 74 kJ/m$^2$ at 23°C and 13 kJ/m$^2$ at -40°C, 50 or more blisters were formed after the high-pressure hydrogen gas exposure/depressurization cycle test. Furthermore, the average diameter of the island portions in the pellets was 0.44 $\mu$m.

In contrast, in Example 1, using the EVOH resin composition of the present invention, comprising a fluororesin (A) having a functional group capable of interacting, or reacting, with a hydroxyl group, a thermoplastic resin (B) having a carboxyl group or an acid anhydride group, and a saponified ethylene-vinyl ester copolymer (C), the results were excellent, with 0 blisters after the high-pressure hydrogen gas exposure/depressurization cycle test. Furthermore, in the impact resistance tests, the value was remarkably good at 82 kJ/m$^2$ at 23°C, and practical utility was demonstrated at 6 kJ/m$^2$ at -40°C as well. There were no problems in terms of fluidity in the melt viscosity test, with a value of 0.8 g/10 min at 220°C. Furthermore, the average diameter of the island portions was 0.3 $\mu$m, which was 1 $\mu$m or less, and thus the dispersion was good.

As shown in Table 1, the specimens produced from the EVOH resin composition of Example had excellent resistance to hydrogen brittleness, and excellent low-temperature characteristics, and the molding characteristics were good, and it is therefore possible to contribute to improved durability in high-pressure gas hoses or composite containers when the EVOH resin composition of the present invention is used in resin tubes for high-pressure gas or resin liners for composite containers.

[Industrial Applicability]

The high-pressure gas hose or composite container of the present invention can suitably be employed as a hose for supplying or filling high-pressure hydrogen gas into an automobile fuel cell or the like in a hydrogen gas station, or as a high-pressure hydrogen gas storage tank.

Furthermore, the saponified ethylene-vinyl ester copolymer resin composition of the present invention can be suitably employed, for example, as a constituent material for a layer in a high-pressure gas hose of the present invention, or as a constituent material in a layer (resin liner) of a high-pressure gas composite container of the present invention.

More specific modes of the present invention have been set forth with reference to the foregoing Examples, but the foregoing Examples are merely examples and should not be interpreted as limiting. It is clear that various changes and modifications which are apparent to those skilled in the art are within the scope of the present invention.

[Related Applications]

The present application is intended to enjoy the benefit of priority based on Japanese Patent Application (JP 2014-266899) filed on December 27, 2014, the entire content of which is incorporated herein by reference.

[Reference Signs List]

1: Hydrogen supply gantry
2: 100 MPa-class compressor
3: Pressure regulator and pressure resistant container
4: Pressure regulation unit
5: Automatic valve unit
6: Pressure regulator valve
7: Precooling unit
8: $H_2$ container
9: Exposure test equipment
10: Pressure durability test equipment
11: Specimen
$b_1$: Width of narrow parallel-sided portion: 6 mm ± 0.4 mm
$b_2$: Width at ends: 25 mm ± 1 mm
h: Thickness: ≦ 1 mm
$L_0$: Gauge length: 25 mm ± 0.25 mm
$l_1$: Length of narrow parallel-sided portion: 33 mm ± 2 mm

L: Initial distance between grips: 80 mm ± 5 mm
$l_3$: Overall length: ≥ 115 mm
$r_1$: Small radius: 14 mm ± 1 mm
$r_2$: Large radius: 25 mm ± 2 mm

**Claims**

1. A saponified ethylene-vinyl ester copolymer resin composition comprising:

   a fluororesin (A) having a functional group capable of interacting, or reacting, with a hydroxyl group;
   a thermoplastic resin (B) having a carboxyl group or an acid anhydride group (wherein, the fluororesin (A) and saponified ethylene-vinyl ester copolymers having a carboxyl group or an acid anhydride group are excluded); and
   a saponified ethylene-vinyl ester copolymer (C).

2. The saponified ethylene-vinyl ester copolymer resin composition according to claim 1, wherein the percentage content of the functional group capable of interacting, or reacting, with a hydroxyl group in the fluororesin (A), being the (number of moles of polar functional group/number of moles of fluororesin constituent monomers) X 100, is 0.01 to 10 mol%.

3. The saponified ethylene-vinyl ester copolymer resin composition according to claim 1 or 2, wherein the volumetric flow rate of the fluororesin (A) is 0.1 to 1000 $mm^3/s$, wherein
   the volumetric flow rate or Q value is the rate at which the resin is extruded using a flow tester manufactured by Shimadzu Corporation at a temperature higher than the melting point of the fluororesin by 50°C, when extruded through an orifice with a diameter of 2.1 mm and a length of 8 mm under a load of 7 kg.

4. The saponified ethylene-vinyl ester copolymer resin composition according to any of claims 1 to 3, wherein the thermoplastic resin (B) is an acid-modified ethylene-$\alpha$-olefin copolymer rubber.

5. The saponified ethylene-vinyl ester copolymer resin composition according to any of claims 1 to 4, wherein the melt flow rate (230°C, 2160 g load, ASTM D1238) of the thermoplastic resin (B) is 0.1 to 100 g/10 min.

6. The saponified ethylene-vinyl ester copolymer resin composition according to any of claims 1 to 5, wherein the content of ethylene structural units in the saponified ethylene-vinyl ester copolymer (C) is 15 to 60 mol%.

7. The saponified ethylene-vinyl ester copolymer resin composition according to any of claims 1 to 6, wherein the melt flow rate (210°C, 2160 g load, ASTM D1238) of the saponified ethylene-vinyl ester copolymer (C) is 0.5 to 100 g/10 min.

8. The saponified ethylene-vinyl ester copolymer resin composition according to any of claims 1 to 7, wherein the total content of the fluororesin (A) and the thermoplastic resin (B) is 1 to 40 wt% of the saponified ethylene-vinyl ester copolymer resin composition.

9. The saponified ethylene-vinyl ester copolymer resin composition according to any of claims 1 to 8, wherein the content ratio [(A)/(B)] of the fluororesin (A) and the thermoplastic resin (B) in the saponified ethylene-vinyl ester copolymer resin composition is 1/5 to 5/1 (weight ratio).

10. A resin tube for high-pressure gas or a resin liner for a composite container comprising at least one layer that comprises the saponified ethylene-vinyl ester copolymer resin composition according to any of claims 1 to 9.

11. A high-pressure gas hose or a composite container comprising at least one layer that comprises the saponified ethylene-vinyl ester copolymer resin composition according to any of claims 1 to 9.

12. The high-pressure gas hose or composite container according to claim 11, wherein a gas component in the high-pressure gas is hydrogen gas.

**Patentansprüche**

1. Verseifte Ethylen-Vinylester-Copolymer-Harzzusammensetzung, aufweisend:

   ein Fluorharz (A) mit einer funktionellen Gruppe, die in der Lage ist, mit einer Hydroxylgruppe zu interagieren oder zu reagieren;
   ein thermoplastisches Harz (B) mit einer Carboxylgruppe oder einer Säureanhydridgruppe (wobei das Fluorharz (A) und verseifte Ethylen-Vinylester-Copolymere mit einer Carboxylgruppe oder einer Säureanhydridgruppe ausgeschlossen sind); und
   ein verseiftes Ethylen-Vinylester-Copolymer (C).

2. Verseifte Ethylen-Vinylester-Copolymer-Harzzusammensetzung nach Anspruch 1, wobei der prozentuale Anteil der funktionellen Gruppe in dem Fluorharz (A), die in der Lage ist, mit einer Hydroxylgruppe zu interagieren oder zu reagieren, bei 0,01 bis 10 mol% liegt, wenn gilt: (Molzahl einer polaren funktionellen Gruppe/Molzahl von Fluorharz-Monomerbestandteilen) x 100.

3. Verseifte Ethylen-Vinylester-Copolymer-Harzzusammensetzung nach Anspruch 1 oder 2, wobei die Volumenflussrate des Fluorharzes (A) bei 0,1 bis 1000 $mm^3/s$ liegt, wobei
   die Volumenflussrate oder der Q-Wert die Geschwindigkeit ist, mit der das Harz unter Verwendung eines Strömungstesters, hergestellt von Shimadzu Corporation, bei einer Temperatur extrudiert wird, die um 50°C höher liegt als der Schmelzpunkt des Fluorharzes, wenn dieses durch eine Öffnung mit einem Durchmesser von 2,1 mm und einer Länge von 8 mm unter einer Last von 7 kg extrudiert wird.

4. Verseifte Ethylen-Vinylester-Copolymer-Harzzusammensetzung nach einem der Ansprüche 1 bis 3, wobei das thermoplastische Harz (B) ein säuremodifizierter Ethylen-$\alpha$-Olefin-Copolymerkautschuk ist.

5. Verseifte Ethylen-Vinylester-Copolymer-Harzzusammensetzung nach einem der Ansprüche 1 bis 4, wobei die Schmelzflussrate (230°C, 2160 g Last, ASTM D1238) des thermoplastischen Harzes (B) bei 0,1 bis 100 g/10 min. liegt.

6. Verseifte Ethylen-Vinylester-Copolymer-Harzzusammensetzung nach einem der Ansprüche 1 bis 5, wobei der Anteil der Ethylen-Struktureinheiten in dem verseiften Ethylen-Vinylester-Copolymer (C) bei 15 bis 60 mol% liegt.

7. Verseifte Ethylen-Vinylester-Copolymer-Harzzusammensetzung nach einem der Ansprüche 1 bis 6, wobei die Schmelzflussrate (210°C, 2160 g Last, ASTM D1238) des verseiften Ethylen-Vinylester-Copolymers (C) bei 0,5 bis 100 g/10 min. liegt.

8. Verseifte Ethylen-Vinylester-Copolymer-Harzzusammensetzung nach einem der Ansprüche 1 bis 7, wobei der Gesamtanteil des Fluorharzes (A) und des thermoplastischen Harzes (B) der verseiften Ethylen-Vinylester-Copolymer-Harzzusammensetzung bei 1 bis 40 wt% liegt.

9. Verseifte Ethylen-Vinylester-Copolymer-Harzzusammensetzung nach einem der Ansprüche 1 bis 8, wobei das Anteilsverhältnis [(A)/(B)] des Fluorharzes (A) und des thermoplastischen Harzes (B) in der verseiften Ethylen-Vinylester-Copolymer-Harzzusammensetzung bei 1/5 bis 5/1 (Gewichtsverhältnis) liegt.

10. Harzrohr für Hochdruckgas oder Harzauskleidung für einen Verbundstoffbehälter mit mindestens einer Schicht, welche die verseifte Ethylen-Vinylester-Copolymer-Harzzusammensetzung nach einem der Ansprüche 1 bis 9 aufweist.

11. Hochdruckgasschlauch oder Verbundstoffbehälter mit mindestens einer Schicht, welche die verseifte Ethylen-Vinylester-Copolymer-Harzzusammensetzung nach einem der Ansprüche 1 bis 9 aufweist.

12. Hochdruckgasschlauch oder Verbundstoffbehälter nach Anspruch 11, wobei eine Gaskomponente im Hochdruckgas Wasserstoffgas ist.

## Revendications

1. Composition de résine de copolymère d'éthylène-ester vinylique saponifié comprenant :

   une fluororésine (A) présentant un groupe fonctionnel capable d'interagir, ou réagir, avec un groupe hydroxyle ;
   une résine thermoplastique (B) présentant un groupe carboxyle ou un groupe anhydride d'acide (dans laquelle, la fluororésine (A) et copolymères d'éthylène-ester vinylique saponifiés présentant un groupe carboxyle ou un groupe anhydride d'acide sont exclus) ; et
   un copolymère d'éthylène-ester vinylique saponifié (C).

2. Composition de résine de copolymère d'éthylène-ester vinylique saponifié selon la revendication 1, dans laquelle la teneur de pourcentage du groupe fonctionnel capable d'interagir, ou réagir, avec un groupe hydroxyle dans la fluororésine (A), étant le (nombre de moles de groupe fonctionnel polaire/nombre de moles de monomères de constituants de fluororésine) x 100, est de 0,01 à 10 % en mole.

3. Composition de résine de copolymère d'éthylène-ester vinylique saponifié selon la revendication 1 ou 2, dans laquelle le débit volumétrique de la fluororésine (A) est de 0,1 à 1 000 $m^3$/s, dans laquelle
   le débit volumétrique ou valeur Q est la vitesse à laquelle la résine est extrudée en utilisant un dispositif de test d'écoulement fabriqué par Shimadzu Corporation à une température supérieure au point de fusion de la fluororésine de 50°C, lorsqu'elle est extrudée à travers un orifice avec un diamètre de 2,1 mm et une longueur de 8 mm sous une charge de 7 kg.

4. Composition de résine de copolymère d'éthylène-ester vinylique saponifié selon l'une quelconque des revendications 1 à 3, dans laquelle la résine thermoplastique (B) est un caoutchouc de copolymère d'éthylène-oléfine $\alpha$ modifié par un acide.

5. Composition de résine de copolymère d'éthylène-ester vinylique saponifié selon l'une quelconque des revendications 1 à 4, dans laquelle l'indice de fusion (230°C, charge de 2 160 g, ASTM D1238) de la résine thermoplastique (B) est de 0,1 à 100 g/10 min.

6. Composition de résine de copolymère d'éthylène-ester vinylique saponifié selon l'une quelconque des revendications 1 à 5, dans laquelle la teneur en unités structurelles éthylène dans le copolymère d'éthylène-ester vinylique saponifié (C) est de 15 à 60 % en mole.

7. Composition de résine de copolymère d'éthylène-ester vinylique saponifié selon l'une quelconque des revendications 1 à 6, dans laquelle l'indice de fusion (210°C, charge de 2 160 g, ASTM D1238) du copolymère d'éthylène-ester vinylique saponifié (C) est de 0,5 à 100 g/10 min.

8. Composition de résine de copolymère d'éthylène-ester vinylique saponifié selon l'une quelconque des revendications 1 à 7, dans laquelle la teneur totale de la fluororésine (A) et de la résine thermoplastique (B) est de 1 à 40 % en masse de la composition de résine de copolymère d'éthylène-ester vinylique saponifié.

9. Composition de résine de copolymère d'éthylène-ester vinylique saponifié selon l'une quelconque des revendications 1 à 8, dans laquelle le rapport de teneur [(A)/(B)] de la fluororésine (A) et de la résine thermoplastique (B) dans la composition de résine de copolymère d'éthylène-ester vinylique saponifié est de 1/5 à 5/1 (rapport massique).

10. Tube en résine pour gaz haute pression ou chemisage en résine pour un récipient composite comprenant au moins une couche qui comprend la composition de résine de copolymère d'éthylène-ester vinylique saponifié selon l'une quelconque des revendications 1 à 9.

11. Flexible pour gaz haute pression ou récipient composite comprenant au moins une couche qui comprend la composition de résine de copolymère d'éthylène-ester vinylique saponifié selon l'une quelconque des revendications 1 à 9.

12. Flexible pour gaz haute pression ou récipient composite selon la revendication 11, dans lequel un constituant de gaz dans le gaz haute pression est du gaz d'hydrogène.

Fig. 1

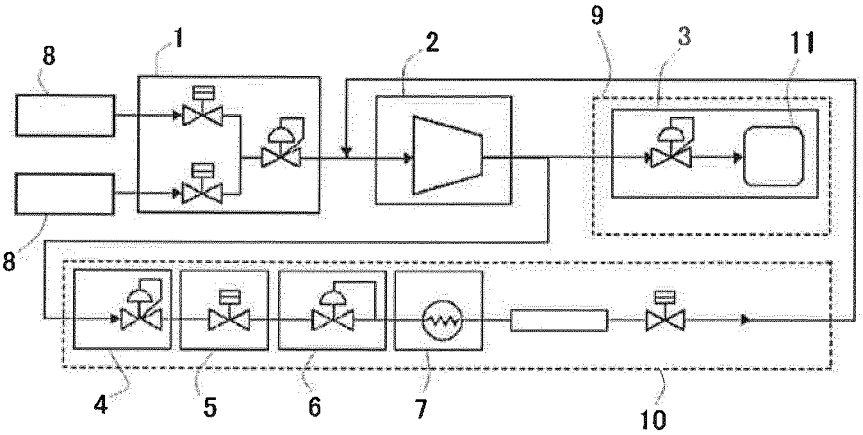


Fig. 2

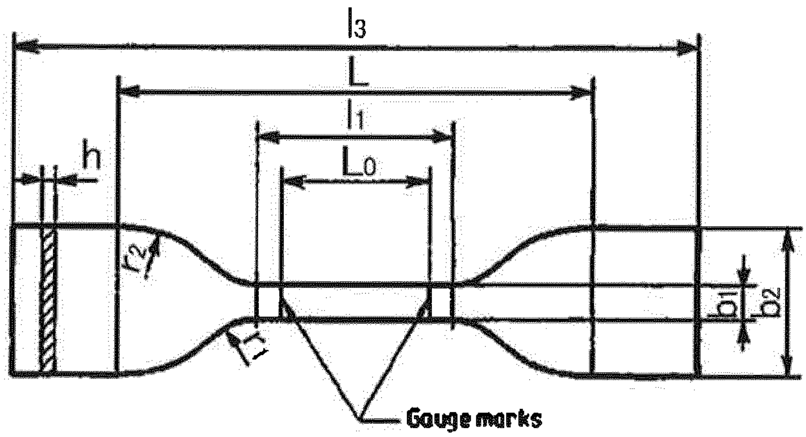

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007015279 A
- JP 2009019717 A
- JP 2010031993 A
- JP 2005068300 A
- JP 2014058659 A
- WO 2014021422 A1
- JP 2004238405 A
- JP 2014266899 A